(19) **Europäisches Patentamt**

**European Patent Office**

**Office européen des brevets**

(11) **EP 1 147 391 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.$^7$: **G01L 11/02**

(86) Internationale Anmeldenummer:
**PCT/CH99/00607**

(21) Anmeldenummer: **99957831.3**

(22) Anmeldetag: **16.12.1999**

(87) Internationale Veröffentlichungsnummer:
**WO 00/039552 (06.07.2000 Gazette 2000/27)**

(54) **FASERLASER-SENSOR ZUR MESSUNG VON DIFFERENTIELLEN DRÜCKEN UND VON STRÖMUNGSGESCHWINDIGKEITEN**

FIBRE LASER SENSOR FOR MEASURING DIFFERENTIAL PRESSURES AND FLOW VELOCITIES

CAPTEUR A LASER A FIBRE POUR LA MESURE DE PRESSIONS DIFFERENTIELLES ET DE VITESSES D'ECOULEMENT

(84) Benannte Vertragsstaaten:
**DE FR GB**

(30) Priorität: **28.12.1998 DE 19860410**

(43) Veröffentlichungstag der Anmeldung:
**24.10.2001 Patentblatt 2001/43**

(73) Patentinhaber: **ABB RESEARCH LTD.**
**8050 Zürich (CH)**

(72) Erfinder:
  • **BOHNERT, Klaus**
    **CH-5452 Oberrohrdorf (CH)**
  • **BRÄNDLE, Hubert**
    **CH-8102 Oberengstringen (CH)**

(74) Vertreter: **ABB Patent Attorneys**
**c/o ABB Schweiz AG**
**Brown Boveri Strasse 6**
**5400 Baden (CH)**

(56) Entgegenhaltungen:
**EP-A- 0 466 623        US-A- 5 515 459**

  • **DAKIN J P ET AL: "Compensated polarimetric sensor using polarisation-maintaining fibre in a differential configuration" ELECTRONICS LETTERS, 5 JAN. 1984, UK, Bd. 20, Nr. 1, Seiten 51-53, XP002133049 ISSN: 0013-5194**
  • **KIM H K ET AL: "Polarimetric fiber laser sensors" OPTICS LETTERS, 15 FEB. 1993, USA, Bd. 18, Nr. 4, Seiten 317-319, XP000339190 ISSN: 0146-9592 in der Anmeldung erwähnt**

**Beschreibung**

**TECHNISCHES GEBIET**

Die vorliegende Erfindung bezieht sich auf das Gebiet der optischen Druckmessung. Sie geht aus von einem faseroptischen Laser nach dem Oberbegriff der Ansprüche 1 und 16.

**STAND DER TECHNIK**

Bei der Erdölförderung müssen Bohrlöcher hinsichtlich Druck und Temperatur überwacht werden. Im Bohrloch können die Flüssigkeitsdrücke bis zu ca. 100 MPa (1000 bar) und die Temperaturen bis zu über 200 °C betragen. Zur Druckmessung bis ca. 170 °C werden häufig elektrische Sensoren, wie z. B. Piezowiderstände, piezoelektrische Elemente, kapazitive Sonden oder Kristallresonatoren, oder optische Drucksensoren, wie z. B. Fabry-Perot Resonatoren oder elastooptische Sensoren, verwendet.

Ein polarimetrischer Faserlaser-Sensor gemäss Oberbegriff ist aus dem Artikel von H. K. Kim et al., "Polarimetric fiber laser sensors", Optics Letters 18 (4), S. 317 - 319 (1993) bekannt. Als Laser- und Drucksensorfaser wird eine Nd-dotierte Faser mit rundem Kern und dichroitisch verspiegelten, für Pumplicht transparenten Enden verwendet. Durch unidirektionalen seitlichen Druck auf die Faser wird eine Doppelbrechung und damit eine Frequenzverschiebung zwischen den linearen Eigenpolarisationen longitudinaler Moden induziert. Die resultierende Schwebungsfrequenz im polarimetrischen Interferenzsignal kann sehr einfach mit einem Frequenzzähler gemessen werden.

Gemäss dem Artikel von G. A. Ball et al., "Polarimetric heterodyning Bragg-grating fiber-laser sensor", Optics Letters 18 (22), S. 1976 - 1978, können anstelle dichroitischer Spiegel auch zwei direkt in den Faserkern geschriebene Faser-Bragg-Gitter zur Begrenzung der Laserkavität verwendet werden.

In beiden Anordnungen sind hydrostatische bzw. allseitig isotrope Drücke nicht messbar. Die Messung stationärer oder absoluter Drücke ist schwierig oder unmöglich, da der Arbeitspunkt, d. h. die Schwebungsfrequenz im unbelasteten Zustand, durch Temperaturschwankungen, Änderungen optischer Parameter wegen Materialermüdung u. ä. unkontrolliert fluktuieren kann.

Serielles Multiplexen passiver Faser-Bragg-Gitter Sensoren ist z. B. aus dem U. S. Pat. No. 4, 761, 073 bekannt. Entlang einer Sensorfaser sind mehrere Faser-Bragg-Gitter mit unterschiedlichen Reflexionswellenlängen eingeschrieben. Jedes Gitter kann wellenlängenselektiv und/oder durch zeitaufgelöste Messung mit einer gepulsten Lichtquelle ausgelesen werden.

US-A-5'515'459 offenbart einen faseroptischen Drucksensor zur Messung eines isotropen Druckes, wobei die Sensorfaser zwei side-hole Fasersegmente mit einer nicht rotationssysmmetrischen Struktur aufweist. Die zwei Fasersegmente sind um 90° gedreht zueinander angeordnet und demselben isotropen Druck ausgesetzt, wobei die seitlichen Löcher des einen Fasersegmentes dem isotropen Druck ausgesetzt sind, die seitlichen Löcher des anderen Fasersegmentes jedoch nicht. Die Verdrehung der zwei Fasersegmente um 90° dient dabei der Temperaturkompensation.

J.P. Darkin and C. Wade, "Compensated polarimetric sensor using polarisation-maintaining fibre in a differential configuration", Electron. Lett. Vol. 20, No. 1, Seiten 51-53, 1984, offenbaren einen faseroptischen Temperatursensor, bei welchem zwei Fasersegmente um 90° gedreht zueinander angeordnet sind, um common-mode Temperaturänderungen und isotrope Druckänderungen zu kompensieren.

**DARSTELLUNG DER ERFINDUNG**

Aufgabe der vorliegenden Erfindung ist es, einen Faserlaser Drucksensor anzugeben, der zur Messung differentieller Drücke in Flüssigkeiten oder Gasen geeignet ist und der sich durch einen einfachen Aufbau, eine gute Messempfindlichkeit und einen grossen Messbereich auszeichnet. Diese Aufgabe wird erfindungsgemäss durch die Merkmale der Ansprüche 1 und 16 gelöst.

Die Erfindung besteht darin, dass in der Laserkavität eines Faserlasers zusätzlich zur laserverstärkenden Faser zwei Sensorfasersegmente angeordnet sind, die nicht rotationssymmetrisch sind und eine gegenläufige Druckabhängigkeit der Doppelbrechung aufweisen, und dass Mittel zur Bestimmung einer doppelbrechungsinduzierten Schwebungsfrequenz vorgesehen sind. Durch die Rotationsasymmetrie wird ein isotroper Druck in eine anisotrope Doppelbrechung im Faserlaser umgesetzt. Die gegenläufige Druckabhängigkeit bewirkt, dass die totale Doppelbrechung und damit die induzierte Schwebungsfrequenz proportional zur Druckdifferenz an den Fasersegmenten ist.

Ein Ausführungsbeispiel zeigt einen Faserlaser-Differenzdrucksensor mit zwei polarimetrischen Sensorfasersegmenten. Durch 90° Verdrehung zwischen den Segmenten ist eine Kopplung zwischen den Polarisationsmoden und dadurch eine entgegengesetzte Druckempfindlichkeit und inhärente Kompensation von Temperatureffekten erreichbar.

Ein anderes Ausführungsbeispiel zeigt einen Faserlaser-Differenzdrucksensor mit zwei räumlich zweimodigen Sensorfasersegmenten. Die entgegengesetzte Druckempfindlichkeit und Temperaturkompensation ist durch Kopplung zwischen den Raummoden an einem transversal versetzten Spleiss zwischen den Segmenten erreichbar.

Ein weiteres Ausführungsbeispiel stellt eine serielle Anordnung mehrerer Faserlaser-Differenzdrucksensoren mit unterschiedlichen Emissionswellenlängen dar, die über eine gemeinsame Pumplichtquelle gespiesen werden und deren druckproportionale Schwebungsfrequenzen wellenlängenselektiv detektiert werden.

Zusätzliche Ausführungsbeispiele betreffen Druckgehäuse für Faserlaser, bei denen die Sensorfasersegmente in Druckaustausch mit zwei Medien stehen und gegebenenfalls die laserverstärkende Faser und die als Laserspiegel wirksamen Faser-Bragg-Gitter von den Drücken abgeschirmt sind.

Weitere Ausführungen, Vorteile und Anwendungen der Erfindung ergeben sich aus den abhängigen Ansprüchen sowie aus der nun folgenden Beschreibung anhand der Figuren.

## KURZE BESCHREIBUNG DER ZEICHNUNG

Es zeigen für einen erfindungsgemässen Differenzdrucksensor:

Fig. 1 einen polarimetrischen Faserlaser-Differenzdrucksensor;
Fig. 2 Beispiele für nicht rotationssymmetrische Sensorfasern;
Fig. 3 eine alternative polarimetrische Detektionseinheit;
Fig. 4 einen transversal zweimodigen Faserlaser-Differenzdrucksensor;
Fig. 5 eine Multiplexanordnung in Reflexion mit mehreren Faserlaser-Differenzdrucksensoren mit unterschiedlichen Emissionswellenlängen;
Fig. 6-8 verschiedene Druckgehäuse für einen Faserlaser-Differenzdrucksensor; und
Fig. 9 ein Venturirohr mit Differenzdrucksensor zur Bestimmung von Durchflussgeschwindigkeiten.

In den Figuren sind gleiche Teile mit gleichen Bezugszeichen versehen.

## WEGE ZUR AUSFÜHRUNG DER ERFINDUNG

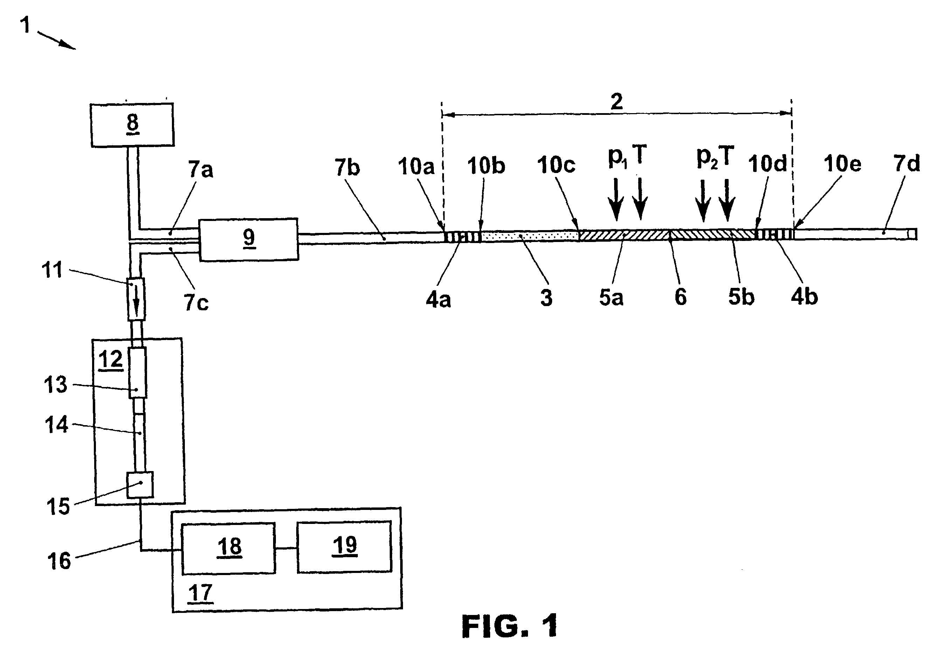

Nach Fig. 1 umfasst ein erfindungsgemässer Faserlaser-Differenzdrucksensor eine Pumplichtquelle 8, Zuführungsfasern 7a-7d, einen Faserlaser 2, der eine laserverstärkende Faser 3 und mindestens zwei Endreflektoren 4a, 4b aufweist, eine Detektionseinheit 12 und eine Auswerteelektronik 17. Zwischen den Endreflektoren 4a, 4b sind mindestens zwei Sensorfasersegmente 5a, 5b mit einer nicht rotationssymmetrischen und dadurch anisotrop druckempfindlichen Struktur angeordnet. Die Sensorfasersegmente 5a, 5b haben eine entgegengesetzte Druckempfindlichkeit der Doppelbrechung und die Detektionseinheit 12 und Auswerteelektronik 17 umfassen Mittel zur Bestimmung einer doppelbrechungsinduzierten Schwebungsfrequenz. Die Schwebungsfrequenz ist somit weitgehend proportional zur Differenz der Drücke $P_1$ und $p_2$, die auf die beiden Sensorfasersegmente 5a, 5b des Faserlasers 2 wirken. Die entgegengesetzte oder differentielle Druckempfindlichkeit ist insbesondere dadurch realisierbar, dass die Sensorfasersegmente 5a, 5b mehrere Polarisationsmoden und/oder Raummoden tragen und zwischen den Sensorfasersegmenten 5a, 5b eine optische Kopplung mit Modenaustausch vorgesehen ist. Die Sensorfasersegmente 5a, 5b sind also miteinander optisch so verbunden, dass ihre Fasermoden (Polarisationsmoden, Raummoden) differentiell, d. h. über Kreuz, gekoppelt sind.

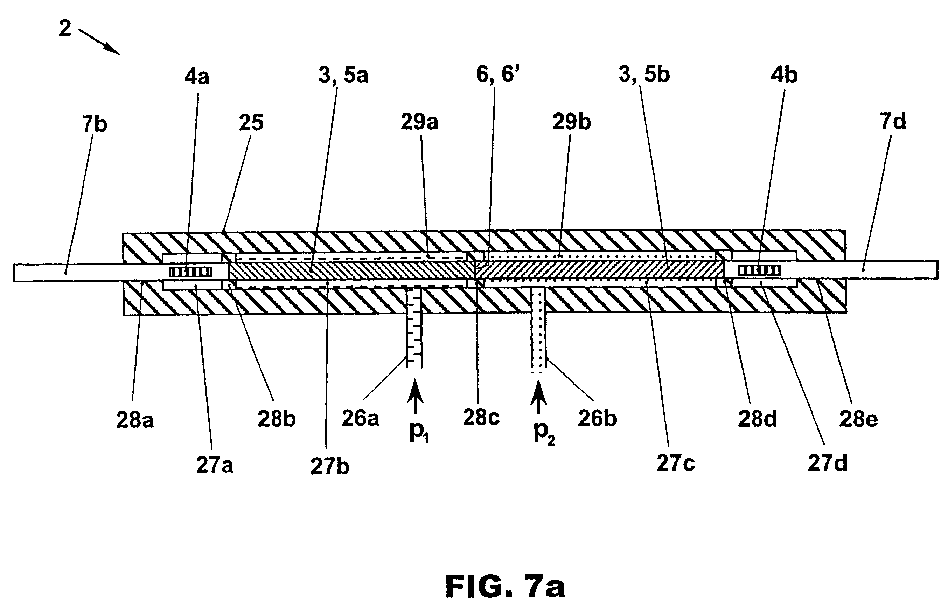

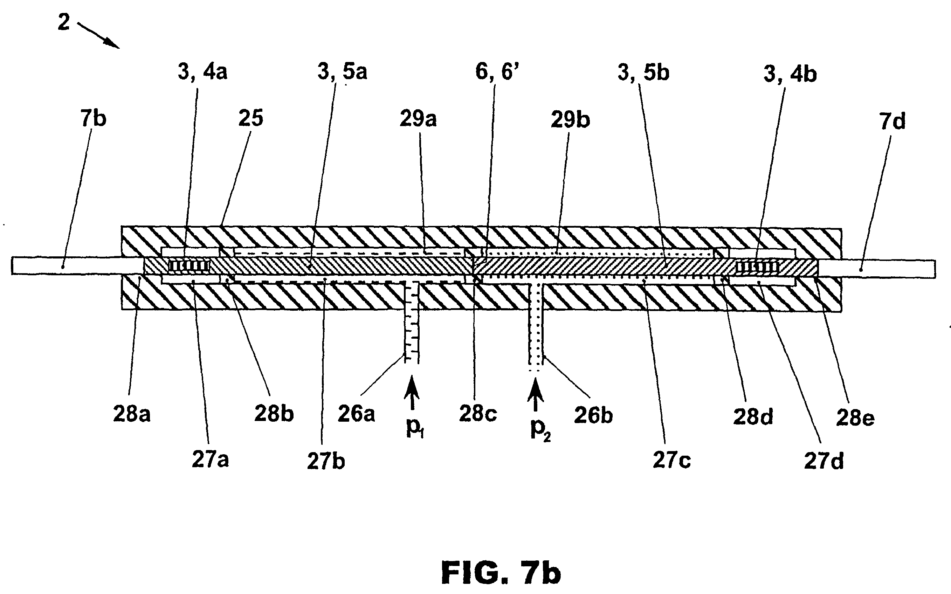

Die Sensorfaser 5a, 5b ist typischerweise doppelbrechend, insbesondere stark doppelbrechend oder polarisationserhaltend. Gut geeignet sind eine als Polarimeter wirkende Monomodefaser (Fig. 1) oder eine als Zweimodenfaser verwendbare Faser mit elliptischem Kern (Fig. 7). In der dargestellten Reflexionskonfiguration steht die Pumplichtquelle 8, der Faserlaser 2 und die Detektionseinheit 12 durch einen vorzugsweise wellenlängenselektiven Faserkoppler 9 in optischer Verbindung. Die Detektionseinheit 12 weist Mittel zur Detektion einer Schwebungsfrequenz im Empfangslicht vom Faserlaser 2, insbesondere eine aktive Polarisationskontrolle 13, einen Analysator 14 und einen Detektor 15 für das vom Faserlaser-Drucksensor 1 gesendete Licht, auf. Alternative zur Polarisationskontrolle 13 können die Komponenten 7b-7d, 9, 11 polarisationserhaltend ausgelegt und mit gleicher Orientierung wie der Analysator 14 verwendet werden. Als weitere Alternative kann das Schwebungssignal unmittelbar ausserhalb des Faserlasers 2 durch einen Faserpolarisator 14 (nicht dargestellt) erzeugt werden, der unter einem Winkel $\neq 0°$ oder $90°$, insbesondere unter $45°$, zu den Doppelbrechungsachsen der Sensorfaser 5a, 5b orientiert ist. Der Detektor 15 ist über eine Signalleitung 16 mit der Auswerteelektronik 17 verbunden, die ihrerseits Mittel zur Bestimmung der Schwebungsfrequenz, insbesondere einen Frequenzfilter 18 und einen Frequenzzähler 19, aufweist. Typischerweise sind die Fasern 3, 4a, 4b, 5a, 5b durch Spleisse 10a-10e miteinander und mit den Zuführungsfasern 7b, 7d verbunden und bilden einen mechanisch stabilen Aufbau. Ein optischer Isolator 11 zwischen dem Faserkoppler 9 und der Detektionseinheit 12 ist nützlich zur Unterdrückung von Rückreflexen in den Faserlaser 2.

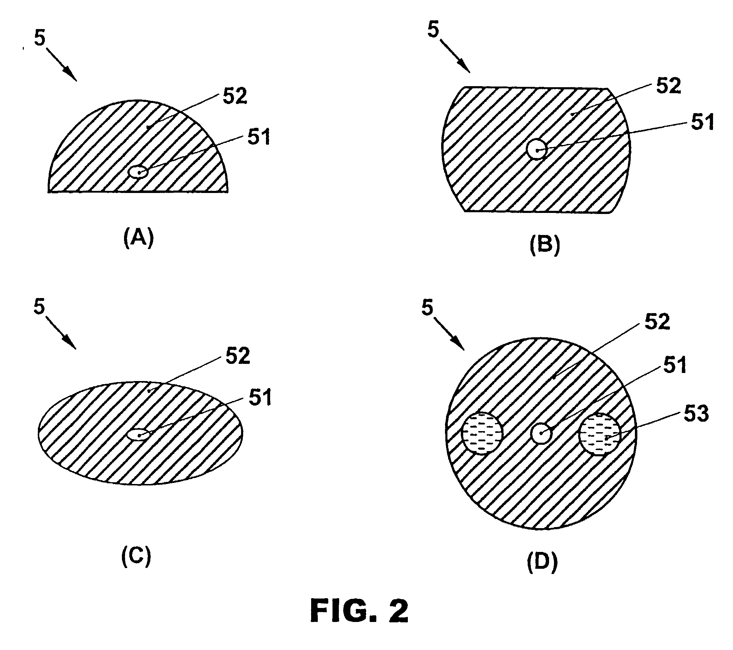

Die rotationsasymmetrische Struktur der Sensorfasersegmente 5a, 5b dient dazu, eine Anisotropie zur Umsetzung der isotropen Drücke $P_1$, $p_2$ zweier Fluide 29a, 29b in eine Doppelbrechung der Sensorfaser 5a, 5b zu schaffen. Neben den Fasern mit elliptischem Kern (forminduzierte Doppelbrechung) sind auch solche mit "bow-tie"- oder "panda"-Struktur (stressinduzierte Doppelbrechung) gebräuchlich. Diese Typen sind in dem Artikel von K.-H. Tsai et al., "General Solutions for Stress-Induced Polarization in Optical Fibers", Journal of Lightwave Technology Vol. 9, Nr. 1, 1991 dargestellt. Fig. 2 zeigt als weitere Beispiele für doppelbrechende Sensorfasern 5a, 5b eine Faser (A) mit elliptischem oder rundem Kern 51 und angeschliffener Hülle 52 ("D-shape" Struktur), eine Faser (C) mit elliptischem Kern und elliptischer Faserhülle und eine Faser (D) mit rundem Kern 51, runder Hülle 52 und Seitenlöchern 53 ("side-hole" Struktur). Eine Besonderheit stellt die im unbelasteten Zustand doppelbrechungsfreie Faser (B) mit rundem Kern 51 und teilweise angeschliffener, rotationsasymmetrischer Faserhülle 52 dar. Die Faserhülle 52 kann einseitig, zweiseitig oder mehrseitig angeschliffen sein, so dass durch isotropen Druck die Entartung der Polarisationsmoden aufgehoben und Doppelbrechung induziert wird.

Mit Vorteil tragen die Sensorfasersegmente 5a, 5b genau zwei Polarisationsmoden (polarimetrische Faser) und sind zueinander um 90° verdreht oder sie tragen genau zwei Raummoden (Zweimodenfaser) und sind um 0° zueinander verdreht. Insbesondere sind die Sensorfasersegmente 5a, 5b vom gleichen Typ und haben gleiche Länge. Dadurch ist eine temperaturabhängigkeit der statischen und druckinduzierten Doppelbrechung inhärent kompensierbar. Ferner kann eine Zwischenfaser 30 zwischen den Sensorfasersegmenten 5a, 5b angeordnet sein.

Vorzugsweise handelt es sich bei den Endreflektoren um Faser-Bragg-Gitter 4a, 4b. Insbesondere ist die Bragg-Wellenlänge $\lambda_B$ ein Mass für die Temperatur. Zur Bestimmung der temperaturinduzierten Bragg-Wellenlängenverschiebung (ca. 10,3 pm/°C bei 1550 nm) wird Empfangslicht z. B. mit einem Faserkoppler abgezweigt und in einem Spektrometer analysiert (nicht dargestellt). Die Faser-Bragg-Gitter 4a, 4b können direkt in die laserverstärkende Faser 3 und/oder in die Sensorfasersegmente 5a, 5b geschrieben sein. Zur Verbesserung der Unempfindlichkeit gegen thermische Drift können die Faser-Bragg-Gitter 4a, 4b mit unterschiedlicher Bandbreite, bevorzugt $\Delta\nu_B^{(1)} = 0{,}6$ nm und $\Delta\nu_B^{(2)} = 0{,}2$ nm, gewählt sein. Die Reflektivitäten der Faser-Bragg-Gitter 4a, 4b betragen typischerweise 99% und 90%. Statt Faser-Bragg-Gittern 4a, 4b können reflektierende dichroitische Schichten vorgesehen sein.

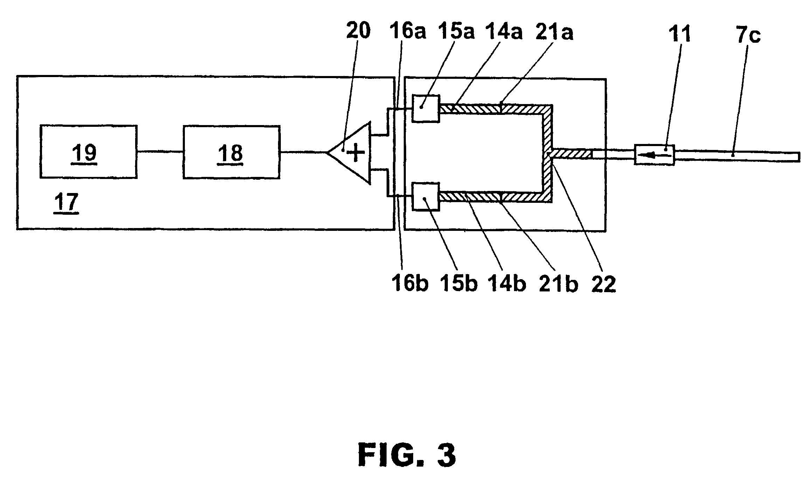

Die Fig. 1 und 3 zeigen Anordnungen zur Erzeugung und Detektion der Schwebungsfrequenz(en) für polarimetrische Sensorfasern 5a, 5b. Das vom Faserlaser 2 emittierte Licht wird (überwiegend) auf der Seite des weniger reflektierenden Faser-Bragg-Gitters 4a (Fig. 1, Reflexionskonfiguration) oder 4b (nicht dargestellte Transmissionskonfiguration) ausgekoppelt. Im Faserkoppler 9 wird das Emissionslicht vom Pumplicht aufgrund der verschobenen Wellenlänge separiert. Rückreflexe in den Faserlaser 2 werden durch den vorzugsweise faseroptischen Isolator 11 und durch einen Schräganschliff des Endes der Faser 7d unterdrückt. In der Detektionseinheit 12 werden die linearen Polarisationsmoden x, y vom Analysator 14 zur Interferenz gebracht. Der Orientierungswinkel des Analysators 14 relativ zu den Achsen der Polarisationsmoden x, y beträgt vorzugsweise 45°. Der Analysator 14 kann massivoptisch oder einfacher als Faserpolarisator 14 ausgeführt sein. Im Detektor 15 wird das Interferenzsignal in ein intensitätsproportionales elektrisches Signal umgewandelt. Der Detektor 15, typischerweise eine Photodiode 15, benötigt hierfür eine Bandbreite, die grösser als die zu messende Schwebungsfrequenz ist. Im Frequenzfilter 18 wird das gewünschte Schwebungssignal separiert und einem Frequenzzähler 19 zugeführt. Alternative Ausführungsformen der Auswerteelektronik 17 können einen Radiofrequenz-Spektralanalysator, ein Oszilloskop oder andere Hochfrequenz- oder Mikrowellen-Messinstrumente umfassen.

Fig. 3 zeigt eine alternative erfindungsgemässe Schwebungsfrequenzdetektion. Die Detektionseinheit 12 umfasst hierbei zur Aufspaltung, Polarisationsanalyse und Detektion des Empfangslichts von einem Faserlaser 2 einen polarisationserhaltenden Faserkoppler 22 mit ausgangsseitig zwei unter 0° und 45° orientierten Analysatoren 14a, 14b und zwei Detektoren 15a, 15b. Die Analysatoren sind vorzugsweise Faserpolarisatoren 14a, 14b, die über Spleisse 21a, 21b mit dem Faserkoppler 22 verbunden sind. Die Detektoren 15a, 15b sind über Signalleitungen 16a, 16b mit einem Summierer 20 verbunden, der mit einem Frequenzfilter 18 und einem Frequenzzähler 19 zur Bestimmung der Schwebungsfrequenz in Verbindung steht. Die Schwebungsfrequenz stellt dann ein hochpräzises Mass für die Druckdifferenz $\Delta p = p_1 - p_2$ zwischen beiden Sensorfasersegmenten 5a, 5b des Faserlasers 2 dar. Eine weitere Alternative zur Erzeugung von Interferenz zwischen den Polarisationsmoden besteht darin, eine starke Kopplung zwischen ihnen zu erzeugen, beispielsweise durch Mikroverbiegungen ("micro-bending") der Faser hinter dem optischen Isolator 11.

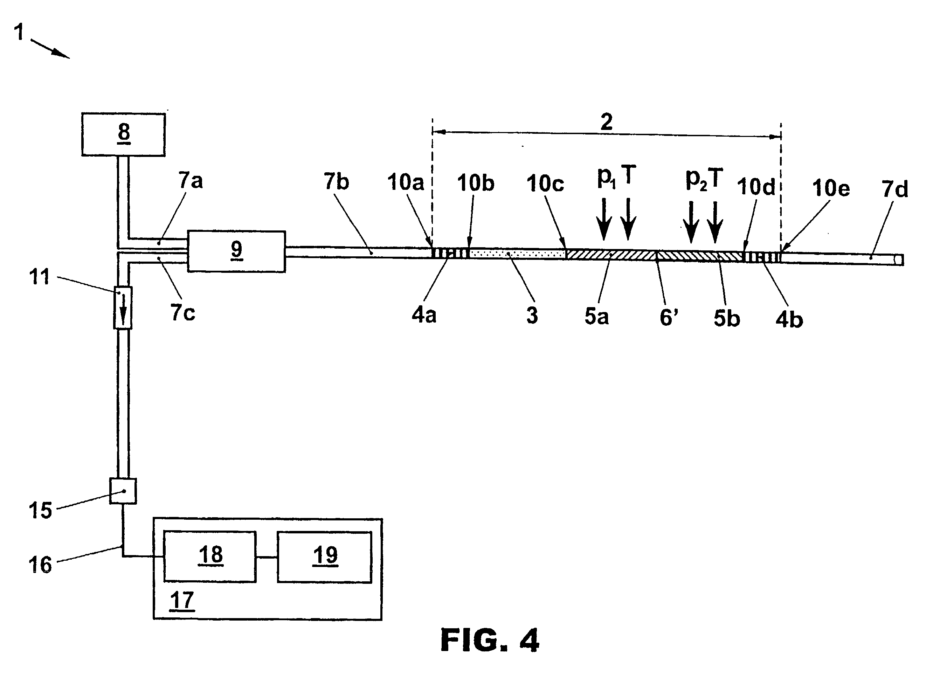

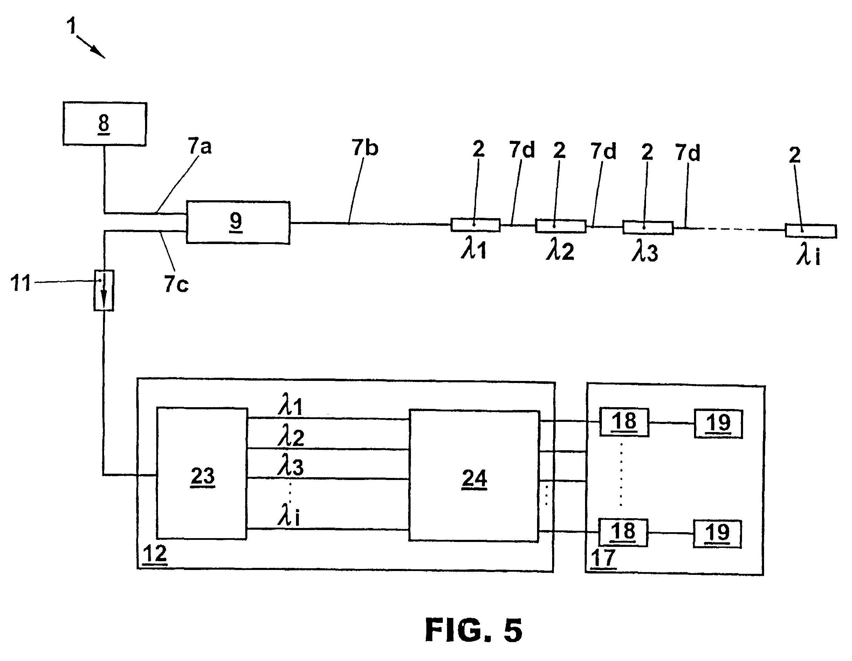

Fig. 4 stellt eine stark vereinfachte Variante zu Fig. 1 dar, bei welcher anstelle einer räumlich einmodigen eine räumlich zweimodige Sensorfaser 5a, 5b mit elliptischem Kern Verwendung findet. Die Interferenzbildung zwischen den räumlichen Moden $LP_{01}$ und $Lp_{11}^{\text{gerade}}$ erfolgt inhärent aufgrund identischer Polarisationsrichtungen der Raummoden. Dadurch entfällt die Notwendigkeit einer Polarisationskontrolle 13 und eines Analysators 14 vor dem Detektor 15. Durch parallele Ausrichtung (0° Verdrehungswinkel) von zweimodigen Sensorfasersegmenten 5a, 5b gleicher Länge und gleichen Typs und durch einen transversalen Versatz der Faserenden im Spleiss 6' sind eine gegenläufig gleiche Druckempfindlichkeit und eine inhärente Temperaturkompensation realisierbar. Mit Vorteil ist in oder neben dem Faserlaser 2 ein Faserpolarisator (nicht dargestellt) angeordnet und insbesondere mit Spleissen eingefügt. Dann können die räumlichen Moden $LP_{01}$ und $LP_{11}^{\text{gerade}}$ nur mit einer linearen Polarisation anschwingen und die Anzahl Schwebungsfrequenzen ist halbiert. Insbesondere ist die Bragg-Wellenlänge $\lambda_B$ im Spektralbereich einer verschwindenden Gruppenbrechungsindex-Doppelbrechung der Sensorfaser 5a, 5b gewählt, um den Einfluss einer Temperaturabhängigkeit der Doppelbrechung zurückzudrängen. Der Sensoraufbau gemäss Fig. 4 zeichnet sich durch eine deutlich reduzierte Komplexität und sehr gute Eignung für Multiplexanordnungen gemäss Fig. 5 aus.

Fig. 5 zeigt eine Multiplexanordnung, die mehrere Faserlaser 2 unterschiedlicher Emissionswellenlängen $\lambda_1, ..., \lambda_i$ umfasst. Die Faserlaser 2 stehen mit einer gemeinsamen Pumplichtquelle 8 und einer Detektionseinheit 12 in optischer Verbindung. Die Detektionseinheit 12 weist einen Wellenlängendemultiplexer 23 und einen Mehrkanal-Detektor 24 auf, der mit einer Mehrkanal-Auswerteelektronik 17 in elektrischer Verbindung steht. In jedem Kanal wird eine Schwebungsfrequenz wie zuvor beschrieben detektiert. Insbesondere umfasst die Auswerteelektronik 17 für jeden Faserlaser 2 einen Frequenzfilter 18 und einen Frequenzzähler 19. Für die dargestellte serielle Multiplexanordnung sind die Dotierungskonzentrationen und Längen der laserverstärkenden Fasern 3 so gewählt, dass in jedem Faserlaser 2 genügend Pumpleistung absorbiert und genügend Pumpleistung für die nachfolgenden Faserlaser 2 transmittiert wird. Durch Verwendung separater Verstärkungsfasern 3 und Sensorfasern 5a, 5b können das Laserverhalten und die Druckempfindlichkeit des Sensors 1 unabhängig voneinander optimiert werden. Der Abstand zwischen den Emissionswellenlängen ist so gross gewählt, dass die Reflexionsspektren aller Faserlaser 2 auch bei unterschiedlichen Temperaturen überlappungsfrei bleiben und eine spektrale Trennung der Signale im Demultiplexer 23 möglich ist. Somit benötigt jeder Faserlaser 2 für einen Temperaturbereich zwischen 0 °C und 230 °C ein Wellenlängenfenster von mindestens 2,4 nm. Die Multiplexanordnung kann auch parallel aufgebaut sein. Die Ausbreitungsrichtungen von Pumplicht und Laseremission dürfen gleiche Richtung haben. Vorteilhaft an einer Wellenlängen-Multiplexanordnung ist es, dass der grundlegende Aufbau des Sensors 1 (Fig. 1, 4), insbesondere die Reflexionskonfiguration mit einem die Pumpwellenlänge selektierenden Faserkoppler 9, beibehalten werden kann und die Kanaltrennung auf einfache Weise mit dem optischen Wellenlängendemultiplexer 23 durchführbar ist.

Die Pumplichtquelle 8, die Absorptionsbanden der laserverstärkenden Faser 3 und die Bragg-Wellenlängen $\lambda_B$ der Faser-Bragg-Gitter 4a, 4b sind spektral so aufeinander abzustimmen, dass die Laserschwelle für relativ wenige longitudinale Moden im Faserlaser 2 möglichst niedrig ist. Für die beiden Polarisations- oder Raummoden sind die longitudinalen Eigenfrequenzen und daraus die Frequenzabstände $\Delta V_o$, $\Delta V_o'$ zwischen benachbarten Longitudinalmoden in bekannter Weise bestimmbar. Für Sensorfasersegmente 5a, 5b gleichen Typs und gleicher Länge gilt unter Vernachlässigung von Dispersionseffekten

$$\Delta v_o = \Delta v_o' = c / [2 \cdot (nd \cdot L_d + (n_a + n_b) \cdot L)] , \qquad \text{(G1)}$$

wobei $n_d$ = effektive Brechungsindex der dotierten Faser 3; $L_d$ = Länge der dotierten Faser; $n_a$, $n_b$ = effektive Brechungsindizes des eingekoppelten Modes in den beiden Sensorfasersegmenten 5a, 5b, L = Länge der Sensorfasersegmente 5a, 5b und c = Lichtgeschwindigkeit im Vakuum. Die Doppelbrechung ist in beiden Segmenten 5a, 5b entgegengesetzt gleich gross und die Frequenzen beider Moden sind entartet. Durch die Einwirkung unterschiedlicher Drücke $p_1$ und $p_2$ auf die Segmente 5a und 5b wird in diesen eine gegenläufige Doppelbrechung induziert. Daraus resultiert eine totale Phasenverschiebung

$$\Delta\Phi_{tot} = K_p \cdot \Delta p \cdot L , \qquad \text{(G2)}$$

wobei $K_p$ = Proportionalitätskonstante, $\Delta p = p_1 - p_2$ Druckdifferenz. Dieser Ausdruck ist in erster Ordnung gültig und berücksichtigt nicht Abhängigkeiten höherer Ordnung von Druck oder Temperatur. Durch die Phasenverschiebung $\Delta\Phi_{tot}$ werden die Eigenfrequenzen orthogonaler Moden des Faserlasers 2 relativ zueinander verschoben. Dadurch ergeben sich zum Differenzdruck proportionale Schwebungsfrequenzen $\Delta v_1$ und $m \cdot \Delta v_o \pm \Delta v_1$, $m = 1, 2, 3, ...$. Ein eindeutiger Druckmessbereich ist durch die Bedingung $\Delta v_1 < \Delta v_0/2$ bzw. $\Delta\Phi_{tot} < \pi/2$ gegeben.

Zur Verdeutlichung einige quantitative Abschätzungen: Die erforderliche Länge einer polarimetrischen Monomodesensorfaser 5a, 5b mit elliptischem Kern ($K_p = 9.5°/(MPa \cdot m)$ bei $\lambda = 1548$ nm des Faserlasers 2) beträgt für 100 MPa Differenzdruckmessbereich 9,5 cm. Der Frequenz- und Wellenlängenabstand zwischen den longitudinalen Moden ergibt sich aus $L_d = 30$ cm, $L = 10$ cm und $n_d = 1,45$ zu 207 MHz und 1,65 pm. Es werden also nur wenige Moden durch die schmalbandigen Faser-Bragg-Gitter 4a, 4b unterstützt, die Schwebungsfrequenzen sind kaum verbreitert (Linienbreite ca. 10 kHz) und das Druckauflösungsvermögen ist sehr hoch (ca. 4,8 kPa).

Für eine transversal zweimodige Sensorfaser 5a, 5b mit elliptischem Kern ($K_p = 48,9°/(MPa \cdot m)$ bei $\lambda = 1300$ nm des Faserlasers 2) findet man analog: 1,84 cm erforderliche Länge für 100 MPa Messbereich und 0,94 kPa Auflösungsvermögen bei 10 kHz Linienbreite. Auch "bow-tie"- oder "panda"-Fasern sind als zweimodige Sensorfasern 5a, 5b geeignet.

Grundsätzlich kann der Differenzdrucksensor 2 auch aus einem polarimetrischen Monomode-Sensorfasersegment 5a und einem transversal zweimodigen Segment 5b aufgebaut werden.

Bekanntermassen kommen für die laserverstärkende Faser 2 Dotierungen mit Erbium$^{3+}$ (1530 nm-1570 nm; Konzentration ca. 100 ppm-1000 ppm; Pumplicht bei 1480 nm oder 980 nm), Praseodym$^{3+}$ (ca. 1300 nm), Neodym$^{3+}$ (ca. 1060 nm) oder Thulium$^{3+}$ (ca. 810 nm) in Frage. Vorteilhaft bei Erbiumdotierung sind die sehr niedrigen optischen Verluste von Pumplicht und induziertem Laserlicht in den Zuführungsfasern 7a-7d, die Zulässigkeit langer Zuleitungsfasern 7a-7d bis zu mehreren Kilometern und die Verwendbarkeit optischer Standardkomponenten für das 1550 nm Telekommunikationsfenster.

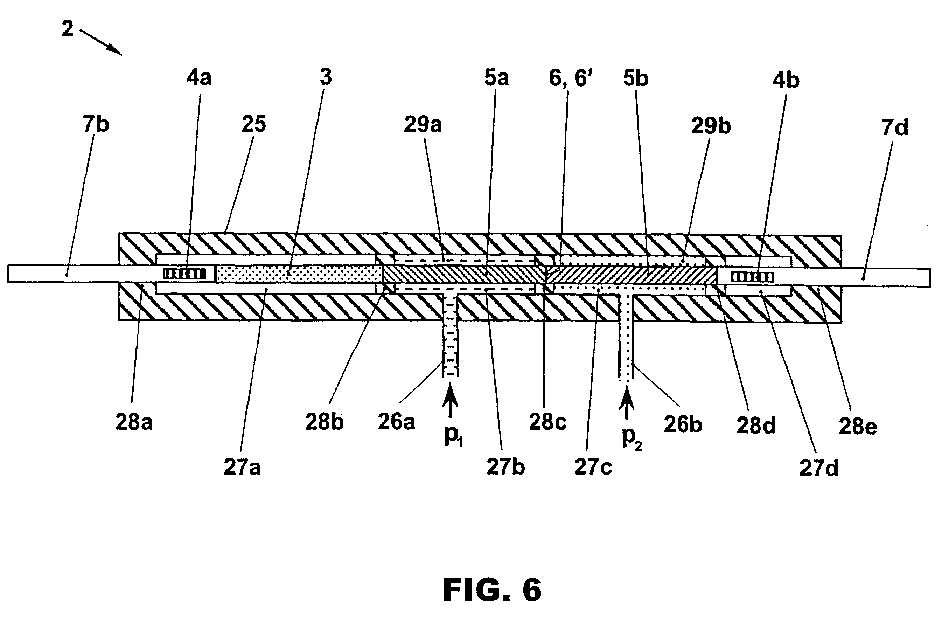

Die Fig. 6-8 zeigen Ausführungsbeispiele von Druckgehäusen 25 für den Faserlaser-Differenzdrucksensor 2. Durch die Transducer 2 oder Druckgehäuse 25 werden die Endreflektoren 4a, 4b und gegebenenfalls die laserverstärkende Faser 3 vor einem Aussendruck abgeschirmt und die entgegengesetzt druckempfindlichen Sensorfasersegmente 5a, 5b unterschiedlichen Drücken $p_1$, $p_2$ ausgesetzt.

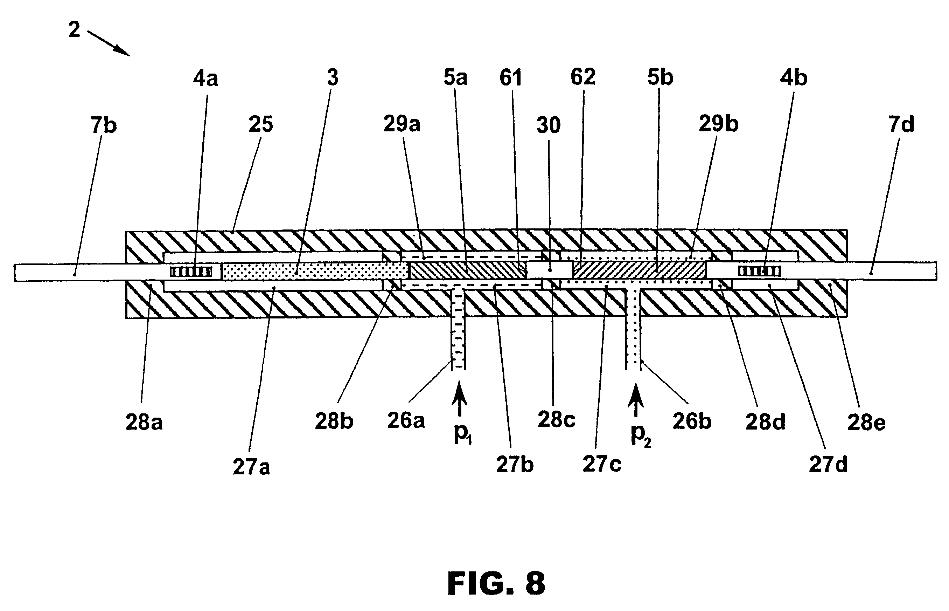

Für diesen Zweck sind die druckfesten Gehäuse 25 mit mehreren, durch druckdichte Faserdurchführungen 28a-28e verbundenen Druckkammern 27a-27d zur Aufnahme eines Faserlasers 2 ausgestaltet. Die Fasern 3, 4a, 4b, 5a, 5b sind spannungsfrei in den Druckkammern 27a-27d befestigt, um Faserdehnungen durch thermische oder mechanische Belastungen des Gehäuses 25 zu vermeiden. Für die Sensorfasersegmente 5a, 5b sind separate Druckkammern 27b, 27c vorgesehen, die über getrennte Einlässe 26a, 26b in direktem Druckaustausch mit mindestens zwei Medien 29a, 29b stehen. Insbesondere sind für Faser-Bragg-Gitter 4a, 4b zusätzliche Druckkammern 27a, 27d vorgesehen. Die laserverstärkende Faser 3 kann in einer zusätzlichen Druckkammer 27a, 27d, vorzugsweise zusammen mit einem Faser-Bragg-Gitter 4a, 4b, angeordnet sein (Fig. 6, 8). Die laserverstärkende Faser 3 kann auch die Sensorfasersegmente 5a, 5b umfassen (Fig. 7a, 7b) und insbesondere mindestens ein Faser-Bragg-Gitter 4a, 4b aufweisen (Fig. 7b). Dadurch können die Laserkavität 2 gekürzt, das Differenzdruck-Auflösungsvermögen erhöht und die Laserschwelle erniedrigt werden.

Das Gehäuse 25 ist typischerweise länglich, insbesondere zylindrisch. Der Durchmesser soll maximal 10 mm betragen. Die Länge ist im wesentlichen durch die Länge des Faserlasers 2 vorgegeben. Das Gehäuse 25 kann anstelle der Einlasse 26a, 26b eine Öffnung mit einer nicht dargestellten Druckmembran zum Druckaustausch zwischen den Medien 29a, 29b und einem Fluid, beispielsweise Silikonöl, im Transducer 2 aufweisen. Auf diese Weise werden die Umgebungsdrücke $p_1$, $P_2$ allseitig auf die Sensorfasersegmente 5a, 5b übertragen und diese vor direktem Kontakt mit den Medien 29a, 29b geschützt.

Das Gehäuse 25 besteht beispielsweise aus korrosionsbeständigem Stahl oder Quarzglas. Eine Innenbeschichtung z. B. mit Gold kann die Eindiffusion von Wasserstoff reduzieren. Bei einem einzelnen Faserlaser 2 oder dem letzten in einer Multiplexanordnung entfallen Zuleitungsfaser 7d und Faserdurchführung 28d und die Faser mit dem Faser-Bragg-Gitter 4b kann innerhalb des Gehäuses 25 enden. Die abgeschirmten Druckkammern 27a, 27d stehen vorzugsweise unter Vakuum, Niederdruckgas oder Normaldruck.

Das Gehäuse 25 dient nur als mechanischer Schutz für die Fasern 3, 4a, 4b, 5a, 5b und zur räumlichen Trennung der Medien 29a, 29b mit den Drücken $p_1$ und $p_2$. Es ist selber nicht am Sensormechanismus beteiligt. Die Faserverankerungen sind unkritisch. Das Gehäuse kann daher sehr einfach für grosse mechanische und thermische Belastungen ausgelegt werden. Es zeichnet sich ferner durch Kompaktheit und geringes Gewicht aus und ist daher sehr gut für den Einsatz in grossen Faserstrecken 7a-7d mit vielen Druckmessstellen, z. B. in Ölförderbohrlöchern, geeignet. Eine hochtemperaturtaugliche Faserummantelung, z. B. aus Polyimide oder Metall, und/oder ein Faserkabel können/kann für die Fasern 3, 4a, 4b, 5a, 5b auch im Gehäuse 25 vorgesehen sein.

In Fig. 8 ist eine einmodige Zwischenfaser 30 im Bereich der druckdichten Faserdurchführung 28c zwischen den Fasersegmenten 5a, 5b gezeigt. Die Zwischenfaser 30 dient dazu, die Kraft der Faserdurchführung 28c aufzunehmen und eine weitgehend kräftefreie Halterung der Sensorfasern 5a, 5b zu ermöglichen. Vorzugsweise hat die Zwischenfaser 30 einen elliptischen Kern, durch den eine fixe, weitgehend kraftunabhängige Achsenorientierung der Doppelbrechung gewährleistet ist. Um druckbedingte Phasenverschiebungen in der Zwischenfaser 30 inhärent zu kompensieren, werden die Polarisations- oder die Raummoden ($LP_{01}$, $LP_{11}^{gerade}$) der Sensorfasersegmente 5a, 5b durch den oder die gleichen Mode(n) der Zwischenfaser 30 übertragen. Hierfür ist die Kernellipse der Zwischenfaser 30 im Falle polarimetrischer Monomode-Sensorfasersegmente 5a, 5b unter ca. 45° und im Falle räumlicher Zweimoden-Sensorfasern 5a, 5b ca. parallel oder orthogonal zu den Achsen der Segmente 5a, 5b ausgerichtet. Im letzteren Fall sind die zusätzlichen Spleisse 61, 62 transversal versetzt, um beide Raummoden der Segmente 5a, 5b möglichst gleichmässig ein- und auszukoppeln.

Bei allen Ausführungsbeispielen kann die Reihenfolge der Fasern 3, 5a, 5b im Faserlaser 2 beliebig gewählt sein. Insbesondere kann die laserverstärkende Faser 3 auch am hinteren Ende des Faserlaser 2 oder zwischen den beiden Sensorfasersegmenten 5a, 5b angeordnet sein.

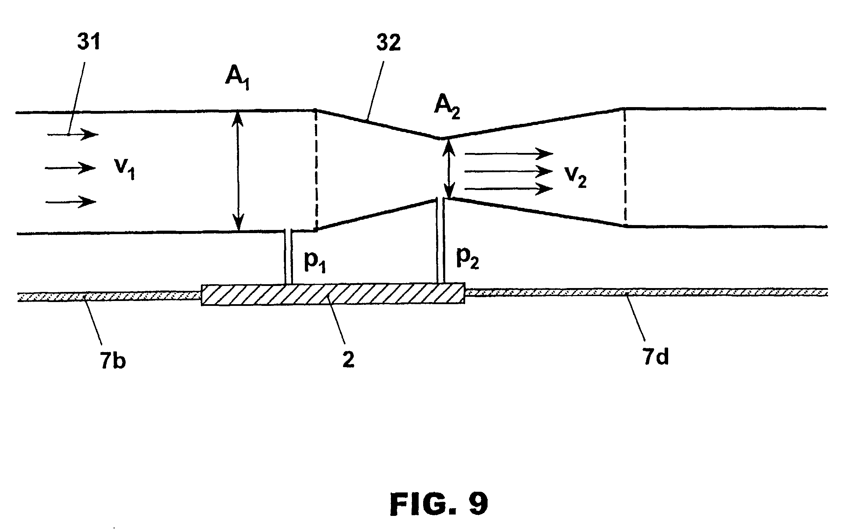

Fig. 9 zeigt eine Verwendung eines erfindungsgemässen Faserlaser-Differenzdrucksensors 1, 25, bei welcher aus einer Differenzdruckmessung eine Strömungsgeschwindigkeit $v_1$ einer Fluidströmung 24 bestimmt wird. Insbesondere sind die Einlässe 26a, 26b des Transducers 1 mit einem Venturirohr 32 an zwei Stellen mit Querschnittsflächen

$A_1$ und $A_2$ verbunden. Aus dem Differenzdruck $\Delta p = p_1 - p_2$ kann in bekannter Weise die Strömungsgeschwindigkeit $v_1$ bestimmt werden.

Wichtige Vorteile des offenbarten Faserlaser-Differenzdrucksensors 1 betreffen: eine hohe Messgenauigkeit durch die Frequenzkodierung des Drucksignals; Eichbarkeit auf Absolutdrücke und inhärente Temperaturkompensation durch die differentielle Kopplung der Sensorfasersegmente 5a, 5b; ein passiv optischer Sensorkopf und eine faseroptische Signalübertragung über grosse Distanzen; und die Verwendbarkeit kommerziell erhältlicher Komponenten, insbesondere Erbium-dotierter Verstärkerfasern und Zweimoden-Sensorfasern mit elliptischem Kern, deren optische Eigenschaften unabhängig voneinander optimiert werden können.

**BEZUGSZEICHENLISTE**

| | |
|---|---|
| 1 | Faserlaser-Differenzdrucksensor |
| 2 | Faserlaser |
| 3 | laserverstärkende Faser, dotierte Faser |
| 4a, 4b | Endreflektoren, Faser-Bragg-Gitter |
| 5a, 5b | doppelbrechende Sensorfaser, Sensorfasersegmente; Fasern mit elliptischem Kern (einmodig oder zweimodig) |
| 51 | Faserkern |
| 52 | Faserhülle ("cladding") |
| 53 | seitliche Löcher |
| 6 | 90°-Spleiss |
| 6' | Spleiss mit transversalem Versatz; 0°-Spleiss |
| 61, 62 | Spleisse für Zwischenfaser |
| 7a-7d | Zuführungsfasern |
| 8 | Pumplichtquelle, Pumplaser |
| 9 | Faserkoppler, Wellenlängenmultiplexer |
| 10a-10e | Spleisse |
| 11 | optischer Isolator |
| 12 | Detektionseinheit |
| 13 | Polarisationskontrolle |
| 14, 14a, 14b | Analysator, Faserpolarisator |
| 15 | Detektor, Photodiode |
| 16 | Signalleitung |
| 17 | Auswerteelektronik |
| 18 | Frequenzfilter |
| 19 | Frequenzzähler |
| 20 | Summierer |
| 21a, 21b | 0°, 45° Spleisse |
| 22 | polarisationserhaltender Faserkoppler |
| 23 | Wellenlängendemultiplexer |
| 24 | Mehrkanal-Detektor |
| 25 | Gehäuse |
| 26a, 26b | Einlässe |
| 27a-27d | Druckkammern, Gehäuseabteile |
| 28a-28e | druckdichte Faserdurchführungen |
| 29a | Medium 1, Fluid 1 (unter Druck $p_1$) |
| 29b | Medium 2, Fluid 2 (unter Druck $p_2$) |
| 30 | Zwischenfaser |
| 31 | Fluidströmung |
| 32 | Venturirohr |
| | |
| $A_1$, $A_2$ | Querschnittsflächen |
| c | Lichtgeschwindigkeit im Vakuum |
| L | Länge der Sensorfasersegmente |
| $L_d$ | Länge der laserverstärkenden Faser |
| $\lambda_B$ | Bragg-Wellenlänge |

$\lambda_1, ..., \lambda_i$        Emissionswellenlängen
$\Delta\nu_B^{(1)}, \Delta\nu_B^{(2)}$ Bandbreiten       der Faser-Bragg-Gitter
$\Delta\nu_o, \Delta\nu_o'$        Frequenzabstand zwischen Longitudinalmoden
$\Delta\nu_1$        fundamentale Schwebungsfrequenz
$n_d, n_a, n_b$        effektive Brechungsindizes
$P_1, P_2$        Drücke
$\Delta p$        Differenzdruck
$v_1, v_2$        Strömungsgeschwindigkeiten

**Patentansprüche**

1. Faserlaser-Differenzdrucksensor (1), insbesondere geeignet zur Druckmessung in Erdölbohrlöchern, umfassend eine Pumplichtquelle (8), Zuführungsfasern (7a-7d), einen Faserlaser (2), der eine laserverstärkende Faser (3) und mindestens zwei Endreflektoren (4a, 4b) aufweist, eine Detektionseinheit (12) und eine Auswerteelektronik (17), wobei die Detektionseinheit (12) und Auswerteelektronik (17) Mittel zur Bestimmung einer doppelbrechungsinduzierten Schwebungsfrequenz umfassen, **dadurch gekennzeichnet, dass** zwischen den Endreflektoren (4a, 4b) mindestens zwei Sensorfasersegmente (5a, 5b) mit einer nicht rotationssymmetrischen Struktur angeordnet sind und die Sensorfasersegmente (5a, 5b) eine entgegengesetzte Druckempfindlichkeit der Doppelbrechung haben.

2. Faserlaser-Differenzdrucksensor (1) nach Anspruch 1, **dadurch gekennzeichnet, dass**

   a) die Sensorfasersegmente (5a, 5b) mehrere Polarisationsmoden und/oder Raummoden tragen und
   b) zwischen den Sensorfasersegmenten (5a, 5b) eine optische Kopplung mit Modenaustausch vorgesehen ist.

3. Faserlaser-Differenzdrucksensor (1) nach einem der Ansprüche 1 oder 2, **dadurch gekennzeichnet, dass** die Sensorfasersegmente (5a, 5b) einen elliptischen Kern, eine "bow-tie"-Struktur, eine "panda"-Struktur, eine "side-hole"-Struktur/ eine "D-shape"-Struktur, eine elliptische Faserhülle oder eine teilweise angeschliffene Faserhülle aufweisen.

4. Faserlaser-Differenzdrucksensor (1) nach einem der AnSprüche 1 bis 3, **dadurch gekennzeichnet, dass**

   a) die Sensorfasersegmente (5a, 5b) genau zwei Polarisationsmoden tragen und zueinander um 90° verdreht sind oder
   b) die Sensorfasersegmente (5a, 5b) genau zwei Raummoden tragen und zueinander um 0° verdreht sind.

5. Faserlaser-Differenzdrucksensor (1) nach einem der Ansprüche 1 bis 4, **dadurch gekennzeichnet, dass** die Sensorfasersegmente (5a, 5b) vom gleichen Typ sind und gleiche Länge haben.

6. Faserlaser-Differenzdrucksensor (1) nach einem der AnSprüche 1 bis 4, **dadurch gekennzeichnet, dass** eine Zwischenfaser (30) zwischen den Sensorfasersegmenten (5a, 5b) angeordnet ist.

7. Faserlaser-Differenzdrucksensor (1) nach einem der Ansprüche 1 bis 6, **dadurch gekennzeichnet, dass**

   a) die Endreflektoren Faser-Bragg-Gitter (4a, 4b) sind und
   b) die Bragg-Wellenlänge $\lambda_B$ ein Mass für die Temperatur ist.

8. Faserlaser-Differenzdrucksensor (1) nach Anspruch7, **dadurch gekennzeichnet, dass** die Faser-Bragg-Gitter (4a, 4b) direkt in die laserverstärkende Faser (3) und/oder in die Sensorfasersegmente (5a, 5b) geschrieben sind.

9. Faserlaser-Differenzdrucksensor (1) nach Anspruch 7, **dadurch gekennzeichnet, dass** die Faser-Bragg-Gitter (4a, 4b) mit unterschiedlicher Bandbreite, bevorzugt $\Delta\nu_B^{(1)} = 0{,}6$ nm und $\Delta\nu_B^{(2)} = 0{,}2$ nm, gewählt sind.

10. Faserlaser-Differenzdrucksensor (1) nach einem der Ansprüche 1 bis 9, **dadurch gekennzeichnet, dass**

   a) die Sensorfaser (5a, 5b) räumlich zweimodig ist,

b) ein Faserpolarisator (14) in oder neben dem Faserlaser (2) angeordnet ist und

c) die Bragg-Wellenlänge ($\lambda_B$) im Spektralbereich einer verschwindenden Gruppenbrechungsindex-Doppelbrechung der Sensorfaser (5a, 5b) gewählt ist.

**11.** Faserlaser-Differenzdrucksensor (1) nach einem der Ansprüche 1 bis 10, **dadurch gekennzeichnet, dass**

a) die Pumplichtquelle (8), der Faserlaser (2) und die Detektionseinheit (12) durch einen vorzugsweise wellenlängenselektiven Faserkoppler (9) in optischer Verbindung stehen,

b) die Detektionseinheit (12) Mittel zur Detektion einer Schwebungsfrequenz im Empfangslicht vom Faserlaser (2) umfasst und

c) die Auswerteelektronik (17) Mittel zur Bestimmung der Schwebungsfrequenz aufweist.

**12.** Faserlaser-Differenzdrucksensor (1) nach Anspruch 2, **dadurch gekennzeichnet, dass**

a) die Detektionseinheit (12) zur Aufspaltung, Polarisationsanalyse und Detektion von Empfangslicht eines Faserlasers (2) einen polarisationserhaltenden Faserkoppler (22) mit ausgangsseitig unter 0° und 45° orientierten Analysatoren (14a, 14b) und zwei Detektoren (15a, 15b) aufweist und

b) die Detektoren (15a, 15b) über einen Summierer (20) mit einem Frequenzfilter (18) und einem Frequenzzähler (19) verbunden sind.

**13.** Faserlaser-Differenzdrucksensor (1) nach einem der Ansprüche 1 bis 12, **dadurch gekennzeichnet, dass**

a) mehrere Faserlaser (2) unterschiedlicher Emissionswellenlängen mit einer gemeinsamen Pumplichtquelle (8) und einer Detektionseinheit (12) in optischer Verbindung stehen,

b) die Detektionseinheit (12) einen Wellenlängendemultiplexer (23) und einen Mehrkanal-Detektor (24) aufweist und

c) eine Mehrkanal-Auswerteelektronik (17) vorgesehen ist.

**14.** Faserlaser-Differenzdrucksensor (1) nach einem der Ansprüche 1 bis 13, **dadurch gekennzeichnet, dass**

a) ein druckfestes Gehäuse (25) mit mehreren, durch druckdichte Faserdurchführungen (28a-28e) verbundenen Druckkammern (27a-27d) zur Aufnahme eines Faserlasers (2) ausgestaltet ist,

b) für die Sensorfasersegmente (5a, 5b) separate Druckkammern (27b, 27c) vorgesehen sind, die in direktem Druckaustausch mit mindestens zwei Medien (29a, 29b) stehen und

c) insbesondere für Faser-Bragg-Gitter (4a, 4b) zusätzliche Druckkammern (27a, 27d) vorgesehen sind.

**15.** Faserlaser Drucksensor (1) nach Anspruch 14, **dadurch gekennzeichnet, dass**

a) die laserverstärkende Faser (3) in einer zusätzlichen Druckkammer (27a, 27d), insbesondere zusammen mit einem Faser-Bragg-Gitter (4a, 4b), angeordnet ist oder

b) die laserverstärkende Faser (3) die Sensorfasersegmente (5a, 5b) umfasst und

c) die laserverstärkende Faser (3) mindestens ein Faser-Bragg-Gitter (4a, 4b) aufweist.

**16.** Verwendung eines faseroptischen Differenzdrucksensors (1) nach einem der Ansprüche 1 bis 15, **dadurch gekennzeichnet, dass**

aus einer Differenzdruckmessung eine Strömungsgeschwindigkeit $v_1$ einer Fluidströmung (31) bestimmt wird, wobei

die Differenzdruckmessung an einem Venturirohr (32) durchgeführt wird.

## Claims

**1.** Fibre laser differential pressure sensor (1), in particular suitable for pressure measurement in oil boreholes, comprising a pumping light source (8), feed fibres (7a-7d), a fibre laser (2), which has a laser-amplifying fibre (3) and at least two end reflectors (4a, 4b), a detection unit (12) and an electronic evaluation unit (17), the detection unit (12) and electronic evaluation unit (17) comprising means for determining a birefringence-induced beat frequency, **characterized in that**

at least two sensor fibre segments (5a, 5b) with a structure that is not rotationally symmetrical are arranged between the end reflectors (4a, 4b), and

the sensor fibre segments (5a, 5b) have an opposite pressure sensitivity of the birefringence.

2. Fibre laser differential pressure sensor (1) according to Claim 1, **characterized in that**

a) the sensor fibre segments (5a, 5b) carry a plurality of polarization modes and/or spatial modes and
b) an optical coupling with mode exchange is provided between the sensor fibre segments (5a, 5b).

3. Fibre laser differential pressure sensor (1) according to either of Claims 1 and 2, **characterized in that** the sensor fibre segments (5a, 5b) have an elliptical core, a "bow-tie" structure, a "panda" structure, a "side-hole" structure, a "D-shape" structure, an elliptical fibre cladding or a partially ground fibre cladding.

4. Fibre laser differential pressure sensor (1) according to one of Claims 1 to 3, **characterized in that**

a) the sensor fibre segments (5a, 5b) carry precisely two polarization modes and are rotated by 90° with respect to one another, or
b) the sensor fibre segments (5a, 5b) carry precisely two spatial modes and are rotated by 0° with respect to one another.

5. Fibre laser differential pressure sensor (1) according to one of Claims 1 to 4, **characterized in that** the sensor fibre segments (5a, 5b) are of the same type and have the same length.

6. Fibre laser differential pressure sensor (1) according to one of Claims 1 to 4, **characterized in that** an intermediate fibre (30) is arranged between the sensor fibre segments (5a, 5b).

7. Fibre laser differential pressure sensor (1) according to one of Claims 1 to 6, **characterized in that**

a) the end reflectors are fibre Bragg-gratings (4a, 4b), and
b) the Bragg wavelength $\lambda_B$ is a measure of the temperature.

8. Fibre laser differential pressure sensor (1) according to Claim 7, **characterized in that** the fibre Bragg-gratings (4a, 4b) are written directly into the laser-amplifying fibre (3) and/or into the sensor fibre segments (5a, 5b).

9. Fibre laser differential pressure sensor (1) according to Claim 7, **characterized in that** the fibre Bragg-gratings (4a, 4b) are chosen with a different bandwidth, preferably $\Delta\nu_B^{(1)} = 0.6$ nm and $\Delta\nu_B^{(2)} = 0.2$ nm.

10. Fibre laser differential pressure sensor (1) as claimed in one of Claims 1 to 9, **characterized in that**

a) the sensor fibre (5a, 5b) is spatially bimodal,
b) a fibre polarizer (14) is arranged in or beside the fibre laser (2), and
c) the Bragg wavelength ($\lambda_B$) is chosen in the spectral region of a vanishing group refractive index birefringence of the sensor fibre (5a, 5b).

11. Fibre laser differential pressure sensor (1) according to one of Claims 1 to 10, **characterized in that**

a) the pumping light source (8), the fibre laser (2) and the detection unit (12) are optically connected by means of a preferably wavelength-selective fibre coupler (9),
b) the detection unit (12) comprises means for detecting a beat frequency in the received light from the fibre laser (2), and
c) the electronic evaluation unit (17) has means for determining the beat frequency.

12. Fibre laser differential pressure sensor (1) according to Claim 2, **characterized in that**

a) the detection unit (12) has, for the purpose of splitting, polarization analysis and detection of received light from a fibre laser (2), a polarization-maintaining fibre coupler (22) with analysers (14a, 14b) oriented at 0° and 45° on the output side and two detectors (15a, 15b), and
b) the detectors (15a 15b) are connected via a summer (20) to a frequency filter (18) and a frequency counter (19).

**13.** Fibre laser differential pressure sensor (1) according to one of Claims 1 to 12, **characterized in that**

a) a plurality of fibre lasers (2) of different emission wavelengths are optically connected to a common pumping light source (8) and a detection unit (12),
b) the detection unit (12) has a wavelength division demultiplexer (23) and a multichannel detector (24), and
c) a multichannel electronic evaluation unit (17) is provided.

**14.** Fibre laser differential pressure sensor (1) according to one of Claims 1 to 13, **characterized in that**

a) a pressure-resistant housing (25) with a plurality of pressure chambers (27a-27d) connected by pressure-tight fibre feedthroughs (28a-28e) is configured for accommodating a fibre laser (2),
b) separate pressure chambers (27b, 27c) are provided for the sensor fibre segments (5a, 5b), said pressure chambers being in direct pressure exchange with at least two media (29a, 29b), and
c) additional pressure chambers (27a, 27d) are provided in particular for fibre Bragg-gratings (4a, 4b).

**15.** Fibre laser pressure sensor (1) according to Claim 14, **characterized in that**

a) the laser-amplifying fibre (3) is arranged in an additional pressure chamber (27a, 27d), in particular together with a fibre Bragg-grating (4a, 4b), or
b) the laser-amplifying fibre (3) comprises the sensor fibre segments (5a, 5b), and
c) the laser-amplifying fibre (3) has at least one fibre Bragg-grating (4a, 4b).

**16.** Use of a fibre-optic differential pressure sensor (1) according to one of Claims 1 to 15, **characterized in that** a flow velocity $v_1$ of a fluid flow (31) is determined from a differential pressure measurement, the differential pressure measurement being carried out on a Venturi tube (32).

## Revendications

**1.** Capteur de pression différentielle à laser à fibres (1), convenant notamment pour la mesure de la pression dans les orifices de forage pétrolier, comprenant une source de lumière de pompage (8), des fibres d'alimentation (7a-7d), un laser à fibres (2) qui présente une fibre amplificatrice de laser (3) et au moins deux réflecteurs d'extrémité (4a, 4b), un module de détection (12) et un circuit électronique d'analyse (17), le module de détection (12) et le circuit électronique d'analyse (17) comprenant des moyens pour déterminer une frequence de battement provoquée par la biréfringence, **caractérisé en ce qu'**au moins deux segments de fibre de détection (5a, 5b) ayant une structure non rotationnellement symétrique sont disposés entre les réflecteurs d'extrémité (4a, 4b) et les segments de fibre de détection (5a, 5b) présentent des sensibilités à la pression contraires de biréfringence.

**2.** Capteur de pression différentielle à laser à fibres (1) selon la revendication 1, **caractérisé en ce que**

a) les segments de fibre de détection (5a, 5b) comportent plusieurs modes de polarisation et/ou modes de l'espace et
b) un couplage optique avec échange de mode est prévu entre les segments de fibre de détection (5a, 5b).

**3.** Capteur de pression différentielle à laser à fibres (1) selon l'une des revendications 1 ou 2, **caractérisé en ce que** les segments de fibre de détection (5a, 5b) présentent un noyau elliptique, une structure en « bow-tie », une structure en « panda », une structure à « side-hole », une structure en « D-shape », une gaine de fibre elliptique ou une gaine de fibre partiellement rectifiée.

**4.** Capteur de pression différentielle à laser à fibres (1) selon l'une des revendications 1 à 3, **caractérisé en ce que**

a) les segments de fibre de détection (5a, 5b). comportent exactement deux modes de polarisation et sont pivotés de 90° l'un par rapport à l'autre et
b) les segments de fibre de détection (5a, 5b) comportent exactement deux modes de l'espace et sont pivotés de 0° l'un par rapport à l'autre.

**5.** Capteur de pression différentielle à laser à fibres (1) selon l'une des revendications 1 à 4, **caractérisé en ce que** les segments de fibre de détection (5a, 5b) sont du même type et ont la même longueur.

**6.** Capteur de pression différentielle à laser à fibres (1) selon l'une des revendications 1 à 4, **caractérisé en ce qu'**une fibre intermédiaire (30) est disposée entre les segments de fibre de détection (5a, 5b).

**7.** Capteur de pression différentielle à laser à fibres (1) selon l'une des revendications 1 à 6, **caractérisé en ce que**

a) les réflecteurs d'extrémité sont des grilles de Bragg à fibres (4a, 4b) et
b) la longueur d'onde de Bragg $\lambda_B$ est une indication de la température.

**8.** Capteur de pression différentielle à laser à fibres (1) selon la revendication 7, **caractérisé en ce que** les grilles de Bragg à fibres (4a, 4b) sont inscrites directement dans la fibre amplificatrice de laser (3) et/ou dans les segments de fibre de détection (5a, 5b).

**9.** Capteur de pression différentielle à laser à fibres (1) selon la revendication 7, **caractérisé en ce que** les grilles de Bragg à fibres (4a, 4b) sont choisies avec des bandes passantes différentes, de préférence $\Delta\nu_B^{(1)} = 0{,}6$ nm et $\Delta\nu_B^{(2)} = 0{,}2$ nm.

**10.** Capteur de pression différentielle à laser à fibres (1) selon l'une des revendications 1 à 9, **caractérisé en ce que**

a) la fibre de détection (5a, 5b) est bimodale dans l'espace,
b) un polariseur à fibres (14) est disposé dans ou à côté du laser à fibres (2) et
c) la longueur d'onde de Bragg ($\lambda_B$) est choisie dans la plage spectrale d'une biréfringence à indice de réfraction groupé infiniment petit de la fibre de détection (5a, 5b).

**11.** Capteur de pression différentielle à laser à fibres (1) selon l'une des revendications 1 à 10, **caractérisé en ce que**

a) la source de lumière de pompage (8), le laser à fibres (2) et le module de détection (12) se trouvent en liaison optique par un coupleur de fibre (9) de préférence à sélectivité de longueur d'onde,
b) le module de détection (12) comprend des moyens pour détecter une fréquence de battement dans la lumière reçue du laser à fibres (2) et
c) le circuit électronique d'analyse (17) présente des moyens pour déterminer la fréquence de battement.

**12.** Capteur de pression différentielle à laser à fibres (1) selon la revendication 2, **caractérisé en ce que**

a) le module de détection (12) présente, pour la séparation, l'analyse de la polarisation et la détection de la lumière reçue d'un laser à fibres (2), un coupleur de fibre à maintien de la polarisation (22) avec des analyseurs (14a, 14b) a la sortie orientés à 0° et à 45° et deux détecteurs (15a, 15b) et
b) les détecteurs (15a, 15b) sont reliés à un filtre à fréquence (18) et un compteur de fréquence (19) via un additionneur (20).

**13.** Capteur de pression différentielle à laser à fibres (1) selon l'une des revendications 1 à 12, **caractérisé en ce que**

a) plusieurs lasers à fibres (2) de différentes longueurs d'onde d'émission se trouvent en liaison optique avec une source de lumière de pompage commune (8) et un module de détection (12),
b) le module de détection (12) présente un multiplexeur de longueur d'onde (23) et un détecteur à plusieurs canaux (24) et
c) il est prévu un circuit électronique d'analyse à plusieurs canaux (17).

**14.** Capteur de pression différentielle à laser à fibres (1) selon l'une des revendications 1 à 13, **caractérisé en ce que**

a) un boîtier résistant à la pression (25) est équipé de plusieurs chambres de pression (27a-27d) reliées par des traversées pour fibre (28a-28e) hermétiques à la pression et destinées à recevoir un laser à fibres (2),
b) des chambres de pression (27b, 27c) séparées sont prévues pour les segments de fibre de détection (5a, 5b), lesquelles se trouvent en relation directe d'échange de pression avec au moins deux fluides (29a, 29b) et
c) notamment prévues pour les grilles de Bragg à fibres (4a, 4b) sont des chambres de pression (27a, 27d) supplémentaires.

**15.** Capteur de pression à laser à fibres (1) selon la revendications 14, **caractérisé en ce que**

a) la fibre amplificatrice de laser (3) est disposée dans une chambre de pression supplémentaire (27a, 27d), notamment avec une grille de Bragg à fibres (4a, 4b) ou
b) la fibre amplificatrice de laser (3) comprend les segments de fibre de détection (5a, 5b) et
c) la fibre amplificatrice de laser (3) présente au moins une grille de Bragg à fibres (4a, 4b).

16. Application d'un capteur de pression différentielle à laser à fibres (1) selon l'une des revendications 1 à 15, **caractérisée en ce qu'**une vitesse d'écoulement $v_1$ d'un courant de fluide (31) est déterminée à partir d'une mesure de pression différentielle, la mesure de pression différentielle étant effectuée a un tube venturi (32).

**FIG. 1**

EP 1 147 391 B1

(A)

(B)

(C)

(D)

**FIG. 2**

**FIG. 3**

**FIG. 4**

EP 1 147 391 B1

FIG. 5

**FIG. 6**

**FIG. 7a**

EP 1 147 391 B1

**FIG. 7b**

EP 1 147 391 B1

FIG. 8

EP 1 147 391 B1

**FIG. 9**

EP 1 147 391 B1